## Europäisches Patentamt
## European Patent Office
## Office européen des brevets

(19)

(11) Veröffentlichungsnummer: **0 078 278**
**B1**

(12) # EUROPÄISCHE PATENTSCHRIFT

(45) Veröffentlichungstag der Patentschrift:
04.02.87

(51) Int. Cl.⁴: **G 03 B 7/081**

(21) Anmeldenummer: 82901350.7

(22) Anmeldetag: 06.05.82

(86) Internationale Anmeldenummer:
PCT/CH 82/00066

(87) Internationale Veröffentlichungsnummer:
WO 82/04131 (25.11.82 Gazette 82/28)

---

(54) BELICHTUNGSREGELEINRICHTUNG AN EINER LUFTBILDKAMERA.

---

(30) Priorität: 11.05.81 CH 3028/81

(43) Veröffentlichungstag der Anmeldung:
11.05.83 Patentblatt 83/19

(45) Bekanntmachung des Hinweises auf die Patenterteilung:
04.02.87 Patentblatt 87/6

(84) Benannte Vertragsstaaten:
DE FR GB

(56) Entgegenhaltungen:
DE-A-2 403 862
DE-A-2 403 863
DE-A-2 715 265

(73) Patentinhaber: WILD HEERBRUGG AG., CH- 9435
Heerbrugg (CH)

(72) Erfinder: KUCHER, Gerhard, Reichsstrasse 23a,
A-6890 Lustenau (AT)

(74) Vertreter: EGLI- EUROPEAN PATENT ATTORNEYS,
Horneggstrasse 4, CH- 8008 Zürich (CH)

LIBER, STOCKHOLM 1987

**Beschreibung**

Die Erfindung bezieht sich auf eine Belichtungsregeleinrichtung an einer Luftbildkamera mit einer Anordnung, an deren Eingängen Signale der gemessenen Werte für die Fluggeschwindigkeit v und die Flughöhe h, oder dem Quotienten

$$\frac{v}{h} \ ,$$

sowie der zulässigen Bildwanderung $\Delta s_{zul}$ zur Ermittlung einer maximal zulässigen Belichtungszeit $T_{zul}$ nach der Formel $T_{zul} =$

$$\frac{\Delta s \ zul}{\frac{v}{h} \cdot -f}$$

sowie der Bildfolgezeit liegen, mit einem Belichtungsmesser zur kontinuierlichen integralen Messung der Helligkeit des überflogenen Terrains und mit Blenden- und Verschlußsteuereinrichtungen, wobei bei Erreichen der durch $T_{zul}$ gegebenen Grenze eine Blendenverstellung ausführbar ist. Bei einer bekannt gewordenen Einrichtung wird von einem Belichtungsmesser, der auf das zu fotografierende Terrain gerichtet ist, ein Signal abgegeben, das die kürzest mögliche Verschlusszeit und die Blende auf den zugehörigen Wert einstellt. Bei schwächer werdender Helligkeit wird die Blende jeweils entsprechend den Lichtverhältnissen bis zu ihrem maximalen Durchmesser geöffnet. Wird die Beleuchtung noch schwächer, so wird auch die Verschlusszeit zu längeren Werten hin verstellt (Manual of color aerial photography, Seite 144, 1968).

Bei einer anderen bekannt gewordenen Einrichtung zur automatischen Belichtungssteuerung wird mit einem Belichtungsmesser das zu fotografierende Terrain abgetastet und die zugehörigen Signale einem Operationsverstärker eingespeist, der ein Ausgangssignal erzeugt, das zur Steuerung der Belichtung für die Aufnahme verwendet wird.

Dabei wird bei einer Belichtungssteuereinrichtung diese mit dem

$$dem \ \frac{v}{h} \ -$$

Sensor verbunden, dessen Signale direkt die Belichtungssteuerung entsprechend beeinflussen und zusätzlich die Bildfolge steuern (Manual of Photogrammetry, Seite 172, 1966, 3. Auflage).

Bei wieder einer anderen Belichtungssteuereinrichtung wird ebenfalls der Wert

$$\frac{v}{h}$$

zusammen mit anderen fotographischen Werten, wie Filterfaktor, zulässige Bildwanderung etc. benützt, um eine maximal zulässige, vom

$$\frac{v}{h}$$

- Wert abhängige Belichtungszeit zu ermitteln und diese einzustellen. In einem zweiten Rechner wird zu dieser Zeiteinstellung in Abhängigkeit von den mit einem Belichtungsmesser gemessenen Helligkeitsverhältnissen die zugehörige Blende errechnet und ebenfalls eingestellt. Ausserdem kann eine weitere Regeleinrichtung in den Grenzlagen der (maximalen und minimalen) Blendeneinstellung auf die Anordnung zur Steuerung der Belichtungszeit zurückwirken (DE-PS 24 03 862).

Bei diesen Geräten ist nachteilig, dass die Belichtungssteuereinrichtung im wesentlichen auf einer fest eingestellten oder von

$$\frac{v}{h}$$

abhängigen und eingestellten Zeit basiert, der die Blende entsprechend den Beleuchtungsverhältnissen nachgeführt wird.

Somit steht für die Aufnahme im allgemeinen nicht die Objektivblende mit der optimalen Abbildungsleistung zur Verfügung.

Es ist jedoch zweckmässig, die optimale Abbildungsqualität der verwendeten Objektive zu nutzen. Diese liegt im Bereich der optimalen Blende.

Es ist ein Ziel der Erfindung, eine Belichtungsregeleinrichtung für eine Luftbildkamera zu schaffen, die diese genannten Nachteile vermeidet und die die Blende und Verschlusszeit unter Berücksichtigung von der im wesentlichen laufend gemessenen Helligkeit des überflogenen und zu fotografierenden Terrains, von der im wesentlichen optimale Abbildungsleistung ergebenden Objektivblende, von den dynamischen Steuereigenschaften der Blenden- und Verschlusssteuereinrichtungen und von der zulässigen oder tolerierbaren Bewegungsunschärfe nach Kriterien optimierend einregelt, um im wesentlichen immer im optimalen Aufnahmebereich auch bei wechselnden Aufnahmebedingungen, geländewie beleuchtungsmässig, arbeiten zu können. Dennoch soll die Belichtungsregeleinrichtung einfach aufgebaut sein und dem Operateur manuellen Eingriff zur Korrektur oder eine automatische Korrektur bei den Bildinhalt verfälschenden Helligkeitsverhältnissen erlauben.

Ausserdem ist es wünschenswert, wenn die Belichtungsregeleinrichtung eine Selbstüberwachungseinrichtung aufweist, um Fehlerfunktionen schon während des Bildfluges erkennen und eventuell korrigieren zu können.

Diese Aufgabe wird erfindungsgemäss durch die in Anspruch 1 gekennzeichneten Mittel gelöst.

Von der Verschlußsteuereinrichtung zum Belichtungsregelkreis kann für die Ist-Verschlusszeit $T_{ist}$ eine Rückmeldeleitung vorgesehen sein, wobei der Belichtungsregelkreis das zu $T_{ist}$ gehörende $\Delta s_{ist}$ mit $\Delta s_{zul}$ vergleicht und für $\Delta s_{ist}$ grösser $\Delta s_{zul}$ ein Signal abgibt, das einer Fehlermeldeeinrichtung zugeführt ist.

Darüber hinaus der kann Belichtungsregelkreis ein Halteglied zur Speicherung des Helligkeitswertes aufweisen.

Zweckmässig kann auch vor dem Belichtuncsrecelkreis ein Korrekturkreis angeordnet sein.

Weiterhin kann der Belichtungsregelkreis mit einem Halteglied und einem Korrekturkreis verbunden sein, wobei die Signale der Momentanwerte für Blende und Verschlusszeit nach einer Kontrolle und Gewichtung mit den gespeicherten Signalen kombiniert werden und diese Kombinationssignale an die Blenden- bzw. Verschlußsteuereinrichtung angeschlossen sind.

Vorteilhaft ist auch ein Selbstüberwachungskreis für die Belichtungsregelkreiseinrichtung, der bei einer Störung ein Signal an die Fehlermeldeeinrichtung abgibt.

Weitere Einzelheiten und Merkmale ergeben sich aus der Beschreibung von Ausführungsbeispielen anhand der Zeichnung. In dieser zeigt

Fig. 1 ein Schaltbild der Belichtungsregeleinrichtung (incl. 2 Varianten),

Fig. 2 die Arbeitskennlinie der Belichtungsregeleinrichtung nach Fig. 1,

Fig. 3 eine Darstellung der kurzzeitigen, örtlich begrenzten Blendensteuer- und Verschlußsteuer-Kennlinien zufolge des dynamischen Verhaltens der Blenden- und Verschlußsteuereinrichtungen bei einer Beleuchtungsänderung,

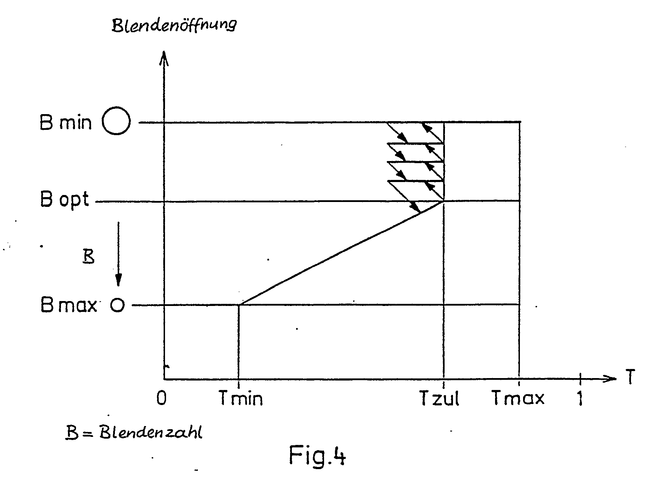

Fig. 4 die Arbeitskennlinie der Ausführung mit der Rückkoppelleitung der Belichtungsregeleinrichtung nach Fig. 1. (2 Strich- 2 Punktlinie).

Die Belichtungsregeleinrichtung weist einerseits einen Belichtungsmesser - 1 - sowie eine Einrichtung 2 zur Abgabe eines

$$\frac{v}{h} -$$

Signals welche das

$$\frac{v}{h} -$$

Signal aus den Einzelmesswerten von v (Fluggeschwindigkeit) und h (Flughöhe) oder mittels eines

$$\frac{v}{h} -$$

- Sensors ermittelt, und andererseits je eine Blenden- und Verschlußsteuereinrichtung - 3 bzw. 4 - auf, wobei die beiden Sensorkreise und die beiden Steuerkreise ausgangsseitig bzw. eingangsseitig an einen Belichtungsregelkreise - 5 - angeschlossen sind. Dieser Belichtungsregelkreis - 5 - weist zusätzliche Eingänge zur Eingabe der Werte für die Filmempfindlichkeit (X) - 7 -, einen Filterfaktor (F) - 8 -, einen Korrekturfaktor (r) - 9 -, die zulässige Bildwanderung $\Delta s_{zul}$ - 10 - und die automatisch beim Aufsetzen der Objektive eingegebene Objektivbrennweite f - 11-und einen Ueberdeckungsregler 6 auf. Darüber hinaus sind auch noch Eingänge für die Werte der maximalen und minimalen Blendenöffnung - 12 bzw. 13 -, welche auch vom eingesetzten Objektiv abgreifbar sind, sowie für die Einstellung der maximalen und minimalen Verschlusszeit - 14 bzw. 15 - in Abhängigkeit von der eingebauten Verschlusseinrichtung - 4 - vorgesehen.

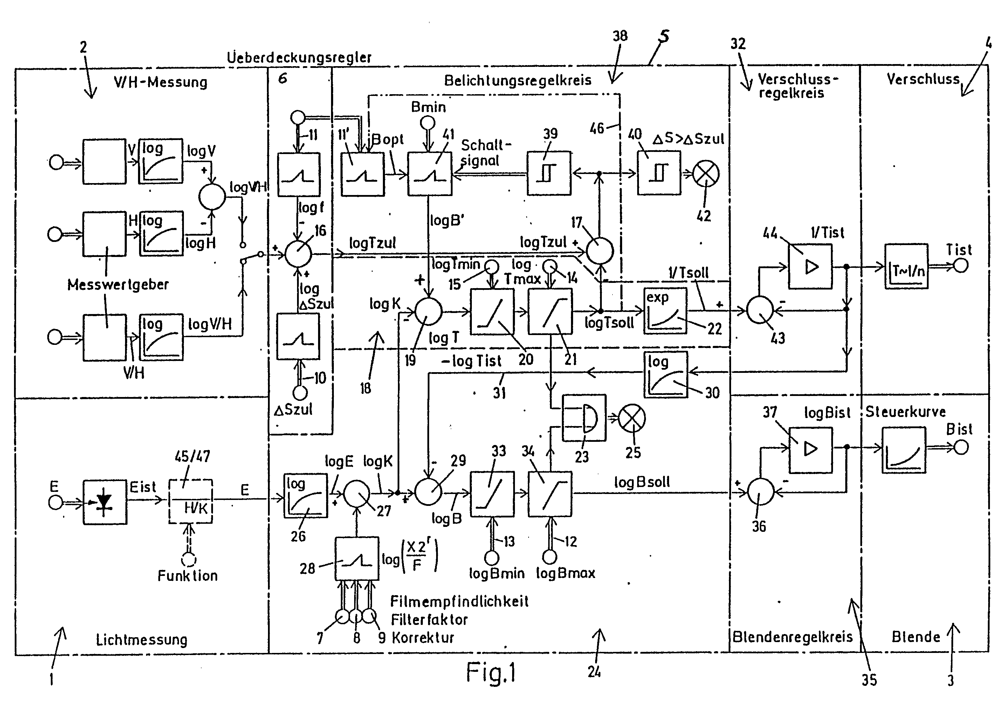

Der Belichtungsregelkreis - 5 - arbeitet, wie beispielsweise in Fig. 1 dargestellt, als Rechner wobei die Signale der effektiven Werte in entsprechende logarithmische Signale umgewandelt und die bekannten Zusammenhänge zwischen den Eingangsgrössen und der Belichtungszeit T sowie der Blende B verwendet werden, um diese zu bestimmen und zu regeln.

Beispielsweise weist eine Variante des Belichtungsregelkreises - 5 - einen an den Eingängen für $\Delta s_{zul}$, für f und für

$$\frac{v}{h} - 10$$

bzw. 11 - angeschlossenen ersten Summierverstärker - 16-auf, der das Sgnal für log $T_{zul} = log$

$$\frac{\Delta s\ zul}{(v/h).f}$$

in Abhängigkeit von den

$$\frac{v}{h}$$

- Signalen erzeugt, das mit

$$\frac{v}{h}$$

veränderlich ist und einen Vergleichswert für die in Abhängigkeit von den vom Belichtungsmesser - 1 - gemessenen Helligkeitswerten einzuregelnde Belichtungszeit darstellt. Dieses Signal log $T_{zul}$ wird einem zweiten Summierverstärker - 17 - zusammen mit einem Signal log $T_{soll}$ zugeführt.

Dieses Signal log $T_{soll}$ ist das Zwischen-Ausgangssignal eines Begrenzerkreises - 18 -, der einen dritten Summierverstärker - 19 - mit ihm nachgeschaltetem ersten unteren Spannungsbearenzungsglied - 20 - und dem folgend ein erstes oberes Spannungsbegrenzungsglied - 21 - sowie einen an diesem liegenden Exponential verstärker - 22 - aufweist, wobei der letztere ein Signal

$$\frac{1}{T}_{soll}$$

an seinem Ausgang abgibt. Das erste untere Spannungsbegrenzungsglied - 20 - weist einen Eingang - 15 - für die minimale Verschlusszeit $T_{min}$ und das erste obere Spannungsbegrenzungsglied - 21 - weist einen Eingang - 14 - für die maximale Verschlusszeit $T_{max}$ sowie einen Ausgang auf, an dem ein ODER-Glied - 23 - eines ersten Subkreises - 24 - des Belichtungsregelkreises - 5 - liegt, auf. An diesem ODER-Glied liegt eine Bereichsgrenzenanzeige - 25 -, welche jeweils bei Erreichen der unteren und oberen Regelbereichsgrenzwerte, also $T_{min}$ und $B_{max}$ sowie $T_{max}$ und $B_{min}$ in Funktion tritt.

Am Eingang dieses Subkreises liegt der Belichtungsmesser - 1 - und gibt ein Signal $E_{ist}$ an einen ersten Logarithmierverstärker - 26 - ab. Ein mit diesem verbundener vierter Summierverstärker - 27 - erhält von einem Eingabeschalter - 28 - das Signal log

$$\frac{x \cdot 2^r}{F} ,$$

wobei x die Filmempfindlichkeit, r ein Korrekturfaktor und F ein Filterfaktor ist, und gibt sein Signal, log K = log

$$( E \cdot \frac{x \cdot 2^r}{F} )$$

einerseits an den dritten Summierverstärker - 19 - des Begrenzerkreises und andererseits an einen fünften Summierverstärker - 29 - ab, welcher mit einem zweiten Logarithmierverstärker - 30 -, der in der Rückmeldeleitung - 31 - für $T_{ist}$ des Verschlussregelkreises - 32 - liegt, verbunden ist und das Rückmeldesignal $T_{ist}$ aufnimmt. Sein Ausgang liegt an einem zweiten unteren Spannungsbegrenzungsglied - 33 -, welches noch einen zusätzlichen Eingang für den minimalen Blendenwert $B_{min}$ (= grösster Blendendurchmesser) - 13 - aufweist, und dieses liegt an einem zweiten oberen Spannungsbegrenzungsglied - 34 -, welches einen Eingang für den maximalen Blendenwert $B_{max}$ (= minimaler Blendendurchmesser) und einen am ODER-Glied - 23 - liegenden Ausgang sowie einen an einem Blendenregelkreis - 35 - liegenden Ausgang für log $B_{soll}$ aufweist.

Der Blendenregelkreis - 35 - weist einen das Signal $B_{soll}$ aufnehmenden sechsten Summierverstärker - 36 - auf, der auch noch das Rückmeldesignal log $B_{ist}$ empfängt und seinerseits ein Signal an einen ersten Leistungsverstärker - 37 - abgibt, an dem die Blendensteuereinrichtung - 3 - liegt.

Das Zwischen- Ausgangssignal log $T_{soll}$ liegt an einem Eingang des zweiten Summierverstärkers - 17 -, an dessen anderem Eingang das Signal log $T_{zul}$ des ersten Summierverstärkers - 16 - liegt.

Der Ausgang liegt an einem zweiten Subkreis - 38 - des Belichtungsregelkreises - 5 - zwischen einem ersten Hystereseglied - 39 - und einem zweiten Hystereseglied - 40 -, welche eine Umschaltung auf je einen benachbarten Blendenwert im Intervall $[B_{opt}, B_{min}]$ bewirken. Das erste Hystereseglied - 39 - gibt ein Schaltsignal an einen Eingabeschalter - 41 - ab, der von einem weiteren Eingabeschalter - 11' - ein dem optimalen Blendenwert $B_{opt}$ des eingesetzten Objektives entsprechendes Signal, das ebenso wie die Eingabe der Objektivbrennweite automatisch vom Objektiv abgenommen wird, erhält und ein Signal log B' an den dritten Summierverstärker - 19 - des Begrenzerkreises - 18 - abgibt. Das zweite Hystereseglied - 40 - ist mit einer Fehlermeldeeinrichtung - 42 - verbunden, die anzeigt, wann $\Delta s > \Delta s_{zul}$ ist.

Das Ausgangssignal

$$\frac{1}{T}_{soll}$$

des Exponentierverstärkers - 22 - liegt an einem siebenten Summierverstärker - 43 - des Verschlussregelkreises - 32 -, wobei dieser Summierverstärker an einem weiteren Eingang ein Rückmeldesignal $I/T_{is}$ empfängt und mit seinem Ausgang an einem zweiten Leistungsverstärker - 44 - liegt, der ein Ausgangssignal an die Verschlußsteuereinrichtung - 4 - abgibt.

Im Normalfall, wenn die Helligkeit genügend gross ist, wird für richtige bzw. entsprechend gewünschte Filmbelichtung eine Zeit-Blendenpaarung erhalten, für die bei Wahl der konstantgehaltenen optimalen Blende $B_{opt}$, d.h. der Blende, bei welcher das Objektiv die optimale Abbildungsleistung aufweist, eine Belichtungszeit T kleiner $T_{zul}$ möglich ist. In diesem abgeschlossenen Intervall $[T_{min}, T_{zul}]$ - dem Normalarbeitsbereich - ist immer $\Delta s_{effektiv} < \Delta s_{zul}$ und darin wird die optimale Blende konst. gehalten sowie die Belichtungszeit gemäss der jeweilig wechselnden Helligkeit bestimmt und nachgeführt. Erreicht die nachgeführte Zeit den Wert $T_{min}$, d.h. die minimal am Verschluss einstellbare Zeit, dann wird, um eine richtige bzw. gewünschte Filmbelichtung zu erhalten, diese Verschlusszeit $T_{min}$ konst. gehalten und die Blende in Abhängigkeit von der Helligkeit nachgeregelt. Wenn die Beleuchtungsverhältnisse nicht ausreichen und die Verschlusszeit den mit

$$\frac{v}{h}$$

variablen Wert $T_{zul}$ annimmt, wird einerseits ein Signal an eine Fehlermeldeeinrichtung - 42 - abgegeben. Diese Fehlermeldeeinrichtung kann eine Signallampe sein. Andererseits wird, um ebenfalls noch richtig bzw. gewünscht belichteten Film zu erhalten, die Blende um einen diskreten Betrag, der nicht eine ganze Blendenstufe sein muss, auf einen kleineren Blendenwert $B_1$ (also mit grösserem Blendendurchmesser als $B_{opt}$) verstellt und für diesen Blendenwert $B_1 < B_{opt}$ wieder die Verschlusszeit-T im Intervall $[T_{min} T_{zul}]$ gemäss der mit dem Belichtungsmesser gemessenen Helligkeit verstellt. Vorzugsweise wird aber bei ausreichender Helligkeit unter Einhaltung eines festsetzbaren Hysteresebetrages die Blende vom diskreten Wert $B_1$ wieder auf den Wert $B_{opt}$ zurückgeregelt. Bei weiterhin abnehmender Helligkeit, wenn auch für diesen Blendenwert $B_1$ $T_{zu1}$ erreicht wird, wird wieder ein Signal an eine Fehlermeldeeinrichtung - 42 - abgegeben und die Blende um einen weiteren diskreten Betrag auf den Blendenwert $B_2 < B_1 < B_{opt}$ eingestellt und die Verschlusszeit T wieder im Intervall $[T_{min} T_{zul}]$ oder einem Teil davon wie bei $B_1$ bzw. mit einer Hysterese geregelt; usw. bis als Blendenwert $B_{min}$ (grösster Blendendurchmesser) erreicht ist. Dabei ist immer $\Delta s_{effektiv} < \Delta s_{zul}$. Auch kann dabei immer mit einer relativ kleinen Verschlusszeit fotographiert werden, was wegen der Flugzeugvibrationen von Vorteil ist.

Die Zeit $T_{zul}$ dient also einzig der Umstellung auf eine andere, wieder konst. gehaltene Blende bzw. der Warnung des Operateurs.

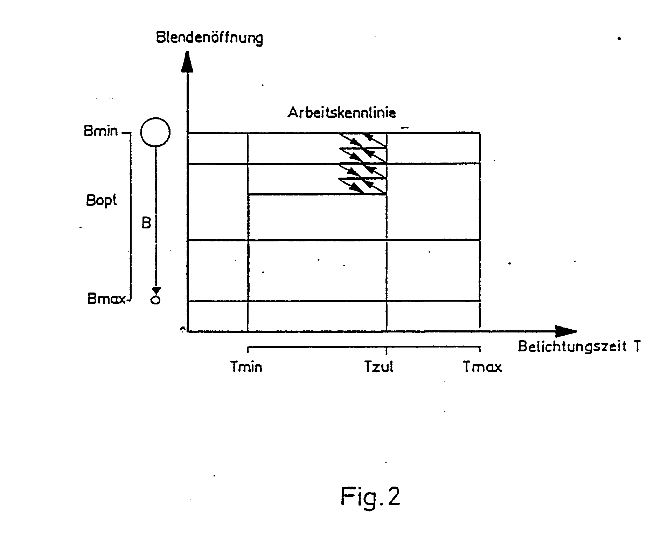

Diese Kennlinienregelabschnitte bzw. Arbeitsbereiche erhält man bei geeigneter Auslegung der Schaltelemente zufolge einer Reihe Optimierungsbedingungen je nach deren Gewichtung. Beispielsweise wird die in Fig. 2 dargestellte Arbeitskennlinie durch die Reihe der Optimierungsbedingungen: mögliches Gesamtstellintervall für die Blende; dynamische Eigenschaften der Blendensteuereinrichtung, insbesondere die notwendige Einstellzeit für eine gewünschte Aenderung des Blendenwertes; dynamische Eigenschaften der Verschlusszeitsteuereinrichtung, insbesondere deren notwendige Einstellzeit für eine gewünschte Aenderung der Verschlusszeit; zulässige Bewegungsunschärfe der Fotografie bzw. der entsprechende-Grenzwert der Verschlusszeit $T_{zul}$ Umgebung des Blendenwertes mit optimaler Abbildungsleistung bzw. optimales Blendenintervall; Lebensdauerfaktor der Verschlusseinrichtung in Abhängigkeit von den jeweils gewählten Verschlusszeiten erhalten. Dabei ist eine Gewichtung in der angegebenen Reihenfolge vorgenommen. Die Bezeichnung optimale Blende bezieht sich auch auf einen Blendenwert aus der Umgebung des theoretischen optimalen Blendenwertes.

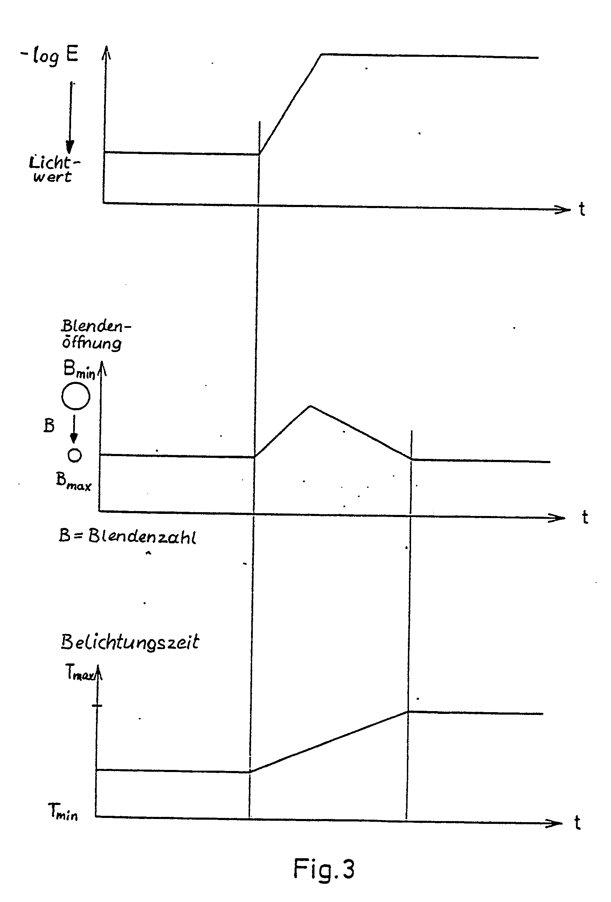

Zufolge der beiden Bedingungen, welche die dynamischen Eigenschaften berücksichtigen, treten kurzzeitige Kennlinienmodifikationen auf, da beispielsweise bei einer helligkeitsbedingten Aenderung der Belichtungszeit zunachst die Blende zufolge der rascheren Verstellmöglichkeit, d.h. kürzeren Reaktionszeit der Blendenverstelleinrichtung, den neuen Helligkeitsverhältnissen angepasst und anschliessend die Verschlusszeit, bei gleichzeitiger Rückstellung der Blende auf den vorhergehend eingestellten optimalen Wert, nachgeregelt wird (schematisch in Fig. 3).

Die aus

$$\frac{v}{h}$$

berechnete zulässige Belichtungszeit $T_{zul}$ dient als Grenzwert-Indikator, der ein warnsignal oder eine Reihe von Korrektursignalen für die diskrete Verstellung der Blende bis zu ihrem Minimalwert (grösste Oeffnung) auslöst, ohne selbst zur Belichtungssteuerung für den Normalarbeitsbereich $T_{zul}$ $T_{min}]$ verwendet zu sein.

Bei einer anderen Variante der Belichtungsregeleinrichtung nach Fig. 1 (in Fig. 1 strichliert eingetragen) ist im Belichtungsmesser - 1 - vor dem Belichtungsregelkreis- 5 - ein Halteglied- 45 - vorgesehen, welches das Signal des Belichtungsmessers während einem geeignet vorgebbaren Zeitraum oder in Abhängigkeit von anderen Signalen speichert und anschliessend an den Belichtungsregelkreis - 5 - zur Weiterverarbeitung abgibt.

Eine andere Variante einer Belichtungsregeleinrichtung (2 Strich-2 Punktlinie in Fig. 1) weist eine Rückkopplung = 46 - vom Ausgang des ersten oberen Spannungsbegrenzunosgliedes - 21 - zum Eingang - 11'- für die Objektivbrennweite und optimale Blende $B_{opt}$- (Objektivtyp) auf.

Durch diese Rückmeldeleitung ist eine Neigung des Kennlinienabschnittes zwischen $T_{min}$ und $T_{zul}$, also der Kennlinie des Normalarbeitsbereiches der Belichtungsregeleinrichtung, gegenüber der Koordinatenachse für die Belichtungszeit T möglich. Eine solche Variante wird dann von Vorteil sein, wenn bei einem Objektiv eine breitere Umgebung der optimalen Blende brauchbare Resultate liefert und der Rotorverschluss möglichst geschont werden, d.h. mit eher niedriger Drehzahl laufen soll. Bei dieser Variante ist eine andere Gewichtung der Optimierungsbedingungen vorgenommen als bei den vorausgehenden Ausführungsbeispielen.

Es ist auch im Rahmen einer anderen Variante der Belichtungsregeleinrichtung möglich, anstelle des Haltekreises - 45 - (strichliert in Fig. 1) einen Korrekturkreis - 47 - vorzusehen, welcher die gemessenen Expositionsdaten entweder durch manuell eingegebene Werte oder nach einer Kontrolle und Gewichtung nach festsetzbaren, praxisbezogenen Bedingungen korrigiert bzw. mit den gespeicherten Signalen kombiniert und diese korrigierten Signale bzw. Kombinationssignale an die Blenden- bzw. Verschlußsteuereinrichtung (3 bzw. 4) abgibt.

In einer vorteilhaften weiteren Ausführungsvariante kann ein Selbstüberwachungskreis für die Belichtungsregeleinrichtung vorgesehen sein, welcher bei einer technischen Störung eines Bereiches ein Signal an die Fehlermeldeeinrichtung - 42 - abgibt. Dabei kann diese so differenziert ausgeführt sein, dass aus der Art der Anzeige (z.B. mittels eines Codes etc.) die Art des Fehlers erkannt wird. Gewisse Fehler können dadurch eventuell noch während des Bildfluges behoben werden, was wesentliche Kosten und Zeit einspart.

Es liegt im Rahmen der Erfindung, dass diese Funktionen der Belichtungsregeleinrichtung und deren Kennlinienverlauf auch mit Hilfe von Mikrocomputern und dergleichen Bauelementen aufgebaut und verwirklicht werden können.

## Patentansprüche

1. Belichtungsregeleinrichtung an einer Luftbildkamera mit einer Anordnung (2), an deren Eingängen Signale der gemessenen Werte für die Fluggeschwindigkeit v und die Flughöhe h, Oder dem Quotienten

$$\frac{v}{h},$$

sowie der zulässigen Bildwanderung $\Delta s_{zul}$ zur Ermittlung einer maximal zulässigen Belichtungszeit $T_{zul}$ nach der Formel

$$T_{zul} = \frac{\Delta s_{zul}}{\frac{v}{h} \cdot f}$$

(f = Brennweite der Kamera) sowie der Bildfolgezeit liegen, mit einem Belichtungsmesser (1) zur kontinuierlichen integralen Messung der Helligkeit des uberflogenen Terrains mit Blenden- und Verschlußsteuereinrichtungen (3, 4), wobei bei -Erreichen der durch $T_{zul}$ gegebenen Grenze eine Blendenverstellung ausführbar ist, <u>dadurch gekennzeichnet</u>, dass an den Ausgang dieser Anordnung (2) und an den des Belichtungsmessers (1) ein Belichtungsregelkreis (5) mit einer Fehlermeldeeinrichtung (42) angeschlossen ist, der mit der Blenden- und Verschlußsteuereinrichtung (3 bzw. 4) derart verbunden ist, dass unter Berücksichtigung der Signale für $T_{zul}$ und der mittleren Helligkeit (E) bei einer optimalen Blendenzahl $B_{opt}$ die Verschlusszeit T im Intervall $(T_{min},...,T_{zul})$ -dem Normalarbeitsbereich- nachgeregelt wird, wobei bei Erreichen der durch $T_{min}$ gegebenen Grenze des Normalarbeitsbereiches die Blende im Intervall $[B_{opt},...,B_{max}]$ ($B_{max}$ - grösste Blendenzahl) nachgeführt wird und die Blendenverstellung von der Blendenzahl $B_{opt}$ nacheinander auf diskrete Werte $B' < B_{opt}$ vorgenommen wird und für jeden dieser diskreten Werte die Regelung der Verschlusszeit T im Intervall $[T_{min},...,T_{zul}]$ erfolgt sowie bei Erreichen der minimalen Blendenzahl $B_{min}$ die Verschlusszeit im Intervall $[T_{zul}, T_{max}]$ geregelt wird.

2. Belichtungsregeleinrichtung nach Anspruch 1, dadurch gekennzeichnet, dass von der Verschlußsteuereinrichtung (4) zum Belichtungsregelkreis (5) für die Ist-Verschlusszeit $T_{ist}$ eine Rückmeldeleitung (31) vorgesehen ist, wobei der Belichtungsregelkreis (5) das zu $T_{ist}$ gehörende $\Delta s_{ist}$ mit $\Delta s_{zul}$ vergleicht und für $\Delta s_{ist} > \Delta s_{zul}$ ein signal abgibt, das einer Fehlermeldeeinrichtung (42) zugeführt ist.

3. Belichtungsregeleinrichtung nach Anspruch 1, dadurch gekennzeichnet, dass vor dem Belichtungsregelkreis (5) ein Halteglied (45) zur Speicherung des Helligkeitswertes angeordnet ist.

4. Belichtungsregeleinrichtung nach Anspruch 1, dadurch gekennzeichnet, dass vor dem Belichtungsregelkreis (5) ein Korrekturkreis (47) angeordnet ist, in welchem die momentan gemessenen Expositionsdaten durch manuell eingegebene Werte korrigierbar sind.

5. Belichtungsregeleinrichtung nach Anspruch 1, dadurch gekennzeichnet, dass ein Korrekturkreis (47) vorgesehen ist, mit Mitteln zum Kontrollieren und Gewichten der Signale der Momentanwerte für Blende und Verschlusszeit und zur Kombination mit den gespeicherten Signalen sowie zur Weiterleitung dieser Kombinationssignale an die Blenden- und Verschlusssteuereinrichtung (3 bzw. 4).

6. Belichtungsregeleinrichtung nach einem der Ansprüche 1 - 5, dadurch gekennzeichnet, dass ein Selbstüberwachungskreis für den Belichtungsregelkreis (5) vorgesehen ist, der bei einer Störung ein Signal an die Fehlermeldeeinrichtung (42) abgibt.

## Claims

1. Device for adjusting the exposure of an aerial photograph camera with an arrangement (2) at whose input ends there are signals for the measured values for the flying speed v and the flying height h or the quotient v/h and for the permissible image motion $\Delta S_{perm}$ for determining the maximum permissible exposure time $T_{perm}$ in accordance with the formula $T_{perm} =$

$$\frac{\angle S_{perm}}{v/h \cdot f}$$

(f = focal distance of camera) and for the exposure intervall or cycling time, with an exposure meter (1) for the continuous integral metering of the brightness of the terrain being overflown, with diaphragm- and shutter-control devices (3,4), whereby a diaphragm control is possible when the limit indicated by $T_{perm}$ has been reached, characterized in that an exposurecontrol circuit device (S) with a fault-signalling device (42) is connected with the output end of this arrangement and with the exposure meter (1) and with the diaphragm- and shutter-control device (3,4) controlling diaphragm and shutter in such a way that in consideration of the signals for $T_{erm}$ and of the mean brightness (E) for an optimal diaphragm value $B_{opt}$, the shutter time T is adjustable within the interval $(T_{min,......},T_{zul})$ representing the normal working range, wherein the diaphragm can be adjusted within the range $(B_{opt,....},B_{max})$ ($B_{max}$ is the maximum diaphragm value) and the diaphragm adjustment from the optimal value $B_{opt}$ is carried out successively to discrete values $B' < B_{opt}$ and that for each of these discrete values the control of the shutter time T is effected in the interval $(T_{min,.....},T_{zu1})$ and where the shutter time is adjustable within the interval $(T_{zul,......},T_{max})$ and when the minimal aperture value $B_{min}$ has been reached.

2. Device according to claim 1, characterized in that from the shutter-control device (4) to the exposure-control circuit device (5) for the effective shutter time $T_{eff}$ a feedback-signal line (31) has been provided, wherein the exposure-control circuit device (5) compares the value of $\Delta S_{eff}$ pertaining to $T_{eff}$ with that of $\Delta S_{perm}$ and emits a signal a signal for $\Delta S_{eff} > \Delta S_{perm}$, which is transmitted to a fault-signalling device (42).

3. Device according to claim 1, characterized in that a holding link (45) for storing the brightness value is placed in front of the exposure-control circuit device (5).

4. Device according to claim 1, characterized in that a correction circuit (47) is placed in front of the exposurecontrol circuit device (5), and that momentary measured exposure datas can be corrected in the correction circuit (47) by values entered manually.

5. Device according to claim i, characterized in that a correction circuit (47) has been provided, which has means for the control and weightening of the signals for momentary values for diaphragm and shutter time and for the combination with stored signals as well as for passing on these combination signals to the diaphragm- and shutter-control device (3,4).

6. Device according to one of the claims 1 to 5, characterized in that an automatic monitoring circuit is provided for the exposure-control circuit device (5), said monitoring circuit being designed for sending a signal to a fault-signalling device (42) in case of a fault.

**Revendications**

1. Système de réglage d'exposition sur un appareil de photographie aérienne, avec un agencement (2) aux entrées duquel sont appliqués des signaux des valeurs mesurées pour la vitesse de vol v et la hauteur de vol h, ou le quotient

$$\frac{v}{h}$$

ainsi que de la migration d'image admissible $\Delta s_{zul}$ pour la détermination d'un temps d'exposition maximal admissible $T_{zul}$ d'après le formule $T_{zul} =$

$$\frac{\Delta s_{zul}}{\frac{v}{h} \cdot f}$$

(f = distance focale de l'appareil photographique) ainsi que de l'intervalle d'exposition, avec un posemètre (1) pour la mesure intégrale continue de la luminosité du terrain survolé avec des dispositifs de commande de diaphragme et d'obturateur (3, 4), un réglage de diaphragme pouvant être exécuté lors de l'obtention de la limite donnée par $T_{zul}$, <u>carectérisé en ce qu'à la sortie de cet agencement (2) et à celle du posemètre (1) est connecté un circuit de réglage d'exposition (5) avec un dispositif de détection d'erreur (42), qui est relié de telle façon au dispositif de commande de diaphragme et d'obturateur (3 et 4) qu'en tenant compte des signaux pour $T_{zul}$ et de la luminosité moyenne (E) pour une valeur de diaphragme optimale $B_{opt}$ le temps d'obturation T est subséquemment réglé dans l'intervalle $[T_{min,....},T_{zul}]$ qui est le domaine de fonctionnement normal, auquel cas, lorsque la limite du domaine de fonctionnement normal, donnée par $T_{min}$, est atteinte, le diaphragme est subséquemment commandé dans l'intervalle $(B_{opt} B_{max}]$ ($B_{max}$ = numéro de diaphragme maximal) et le réglage du diaphragme est entrepris depuis le numéro de diaphragme $B_{opt}$ successivement sur des valeurs discrètes $B' < B_{opt}$ et le réglage du temps d'obturation T dans l'intervalle $[T_{min,....}, T_{zul}]$ s'effectue pour chacune de ces valeurs discrètes, et le temps d'obturation est réglé dans l'intervalle $[T_{zul,...}T_{max}]$ lors de l'obtention du numéro de diaphragme minimal $B_{min}$

2. Système de réglage d'exposition selon la revendication 1, caractérisé en ce qu'une ligne répétitrice (31) est prévue pour le temps réel d'obturation $T_{ist}$ depuis le dispositif de commande d'obturateur (4) jusqu'au circuit de réglage d'exposition (5), le circuit de réglage d'exposition (5) comparant le $\Delta s_{ist}$, associé à $T_{ist}$, avec $\Delta s_{zul}$ et délivre, pour $\Delta s_{ist} > \Delta s_{zul}$, un signal qui est amené à un dispositif de détection d'erreur (42).

3. Système de réglage d'exposition selon la revendication 1, caractérisé en ce qu'un organe de maintien (45), pour la mise en mémoire de la valeur de luminosité, est disposé avant le circuit de réglage d'exposition (5).

4. Système de réglage d'exposition selon la revendication 1, caractérisé en ce qu'avant le circuit de réglage d'exposition (5) est monté un circuit de correction (47) dans lequel les données d'exposition, mesurées momentanément, sont corrigibles par des valeurs introduites manuellement.

5. Système de réglage d'exposition selon la revendication 1, caractérisé en ce qu'un circuit de correction (47) est prévu avec des moyens pour le contrôle et la pondération des signaux des valeurs momentanées pour le diaphragme et le temps d'obturation et pour la combinaison avec les signaux mis en mémoire ainsi que pour la transmission de ces signaux de combinaison au dispositif de commande de diaphragme et d'obturateur (3 et 4).

6. Système de réglage d'exposition selon l'une des revendications 1 à 5, caractérisé en ce qu'un circuit d'autosurveillance est prévu pour le circuit de réglage d'exposition (5), lequel, en cas de perturbation, fournit un signal au dispositif de détection d'erreur (42).

Fig.1

Fig. 2

Fig.3

Fig.4